# EUROPÄISCHE PATENTSCHRIFT

(11) **EP 3 505 488 B1**
(45) Veröffentlichungstag und Bekanntmachung des Hinweises auf die Patenterteilung: **06.12.2023**
(21) Anmeldenummer: 17844048.3
(22) Anmeldetag: 17.02.2017
(51) Int. Cl.: B67D 7/32, B67D 7/08, B67D 7/14, B60K 15/03, B60K 15/073, G07F 13/02, B60S 5/02, B67D 7/34, G08G 1/017, G06Q 20/40

(54) **VERFAHREN UND SYSTEM FÜR ADAPTIVE MULTIFAKTORIELLE KOMBINIERTE IDENTIFIZIERUNG**
METHOD AND SYSTEM FOR ADAPTIVE MULTIFACTOR COMBINED IDENTIFICATION
PROCÉDÉ ET SYSTÈME D'IDENTIFICATION ADAPTATIVE À COMBINAISONS DE FACTEURS MULTIPLES

(30) Priorität: 23.08.2016 UA 201608996 U; 23.08.2016 UA 201608997 U
(43) Veröffentlichungstag der Anmeldung: 03.07.2019
(73) Patentinhaber: Vasyliev, Viktor Ivanovich, Kiev 04205 (UA); Vasyliev, Ievgen Viktorovich, Kyiv 04213 (UA)
(72) Erfinder: Vasyliev, Viktor Ivanovich, Kiev 04205 (UA); Vasyliev, Ievgen Viktorovich, Kyiv 04213 (UA)
(74) Vertreter: Jeck, Anton
(86) Internationale Anmeldenummer: PCT/UA2017/000013
(87) Internationale Veröffentlichungsnummer: WO 2018/038694

(56) Entgegenhaltungen:
- EP-A1- 0 943 584
- EP-A1- 1 094 028
- EP-A2- 1 199 684
- WO-A1-2011/126394
- WO-A2-2008/142423
- UA-U- 99 746
- US-A- 4 469 149
- US-A- 5 204 819
- US-A- 5 923 572
- US-A1- 2015 199 685

## Beschreibung

Die Erfindung betrifft ein Verfahren und ein System zur adaptiven multifaktoriellen Kombinationsidentifikation von Fahrzeugmitteln und deren Besitzern während der automatisierten Prüfung des technischen Zustands von Objekten (Fahrzeugmitteln und stationären Anlagen, darunter auch Energieanlagen) bei der Zuführung von Öl und unterschiedlichen Brennstoffsorten, wie Benzin, Kerosin, Heizöl, Dieselöl und Flüssiggas aus stationären oder mobilen Tankanlagen, sofern tankende Objekte und Tankanlagen mit einer Vorrichtung der automatisierten Objektidentifikation bei der Zuführung von Brennstoff oder Öl mit gleichzeitiger Kontrolle über die Zuführung von Treib- und Schmierstoffen ausgestattet sind. Mögliche Objekte sind Fahrzeugmittel und/oder stationäre Anlagen, die für die Lagerung, den Transport oder den Verbrauch von Brennstoff und Öl dienen, sowie deren Besitzer. Eine gattungsgemässe Vorrichtung entsprechend dem Oberbegriff der Ansprüche 1 und 3 der vorliegenden Erfindung wird in der WO 2008/142423 offenbart.

Die Begriffe "Identifikationsinformationsträger" und "Informationsträger" bedeuten hier und im folgenden Text materielle Gegenstände, technische Mittel sowie Technik für unterschiedliche Anwendungszwecke, die sich im Eigentum des Besitzers von einem Informationsträger befinden und digitale oder analoge Informationen enthalten. Die Information ist mit einer elektronischen Ablesevorrichtung durch Annahme einer magnetischen, elektromagnetischen oder einer anderen Strahlung, einschließlich ionisierender Strahlung, in einem breiten Frequenzband ablesbar. Die Information auf einem Informationsträger kann in beliebiger Form enthalten sein, u. a. als Barcode, holographische Aufzeichnung, Chip, USB-Speicher, Kreditkarte, Rabattkarte, Tag, RFID-Tag, Transponder usw., vorausgesetzt, dass sie auf den Körper eines materiellen Gegenstands permanent und fest aufgetragen ist. Die Information auf einem Informationsträger kann aktiv als auch passiv gestaltet, d. h. entweder ausgestrahlt oder zurückgestrahlt werden.

Der Begriff "Technik" bedeutet hier und im folgenden Text materielle Gegenstände, die sich bewegen können und Betriebsstoffe verbrauchen (Brennstoff, Heizöl, Treib- und Schmierstoffe, Öl, Flüssigkeit, Farbe usw.), technische Mittel, die sich bewegen können und Betriebsstoffe verbrauchen, fahrbare Technik für unterschiedliche Anwendungszwecke, Fahrzeugmittel, u. a. Schienenwagen, Lastkraftfahrzeuge, Personenkraftfahrzeuge usw., die mit einem Behälter für Betriebsstoffe ausgestattet sind.

Der Begriff "Ablesevorrichtung" bedeutet hier und im folgenden Text eine elektronische Vorrichtung zum Ablesen der Information von einem Chip, einem USB-Speicher, einer Kreditkarte, einem Tag, einem RFID-Tag, einem Transponder oder einem beliebigen anderen Informationsträger bis auf Fingerabdrücke.

Der Begriff "zusätzlicher Informationsträger" bedeutet hier und im folgenden Text einen beliebigen materiellen Gegenstand, der eingetragene digitale oder analoge Informationen speichern kann, die mit einer elektronischen Ablesevorrichtung durch Annahme von magnetischer, elektromagnetischer oder einer anderen Strahlung, einschließlich einer ionisierenden Strahlung, in einem breiten Frequenzband abgelesen werden kann. Ein zusätzlicher Informationsträger kann einen Chip, einen USB-Speicher, eine Kreditkarte, eine Rabattkarte, einen Tag, einen RFID-Tag, einen Transponder usw. darstellen. Ein solcher zusätzlicher Informationsträger kann sowohl aktiv als auch passiv sein, d. h. eine eigene Energiequelle haben oder auf der Rückstrahlung einer Strahlung basieren, und muss einen unabhängigen materiellen Träger darstellen.

Der Begriff "Besitzer eines Informationsträgers" bedeutet hier und im folgenden Text eine juristische oder natürliche Person, die "einen zusätzlichen Informationsträger" und ein fahrbares materielles Objekt im Eigentum eines Besitzers eines Informationsträgers mit einem fest angebrachten Informationsträger besitzt.

Der Begriff "Eigentum eines Besitzers eines Informationsträgers" bedeutet hier und im folgenden Text Technik, materielle Gegenstände, technische Mittel oder Technik für unterschiedliche Anwendungszwecke mit einem fest angebrachten Informationsträger, die im Eigentum des Besitzers eines Informationsträgers sind.

Der Begriff "Sensor zum Erkennen akustischer/elektromagnetischer Geräusche/Schwingungen und/oder zum Erkennen der Zuführung/Nichtzuführung eines Treib- und Schmierstoffs in einen Behälter der Technik" bedeutet hier und im folgenden Text einen Sensor beliebiger Wirkungsweise, der erkennt oder registriert, ob ein Verbrauchsstoff, z. B. ein Treib- und Schmierstoff, in den Behälter der Technik zugeführt bzw. nicht zugeführt wird, und eine Information sendet, die für das Identifikationssystem einen zusätzlichen oder Hauptfaktor für die Identifikation der Technik darstellt, und der an der Technik angebracht ist.

Notorisch bekannt ist ein Verfahren zur Identifikation von Fahrzeugmitteln für Bedienungszwecke (s. z. B. http://www.roseman.ru/rfid-tag.html oder http://www.roseman.ru/rfid-reader.html). Es basiert auf einem System mit mehr als einem Informationsträger und mehr als einer Ablesevorrichtung, die alle an einen Datenverarbeiter mit einer Einheit für die Registrierung und Wiedergabe der Information auf einem Bedienerdisplay angeschlossen sind. Nach diesem Verfahren beginnt die Bedienung nach dem Ablesen der Information, die eine mit dem Besitzer verbundene Technik identifiziert. Die Information wird von einem am Behälter der Technik angebrachten Träger mithilfe einer Ablesevorrichtung abgelesen. Die Ablesevorrichtung ist an der Abfüllvorrichtung einer Tanksäule angebracht. Wenn eine im Datenverarbeiter vorgegebene Bedingung erfüllt ist, beginnt eine vorbestimmte Bedienungsprozedur gemäß der Information auf dem Informationsträger.

Dieses Verfahren kann materielle Gegenstände im Eigentum des Besitzers, z. B. ein Fahrzeug, identifizieren und eine entsprechende vorgegebene Dienstleistung erbringen. Das Verfahren kann aber den Besitzer des Gegenstands oder eine Person, die Dienstleistungen derzeit erbringt, und die Zustimmung des Besitzers zur Ausführung der Dienstleistung nicht feststellen, was selbstverständlich absichtliche oder zufällige Fehler in der Bedienung zur Folge haben und natürlicherweise materiellen Schaden hervorrufen kann. Darüber hinaus setzt dieses Verfahren die Anwendung von sehr teuren Informationsträgern (Identifikatoren) voraus, die auf jedem Fahrzeug und jeder Abfüllvorrichtung der Tanksäule angebracht sein müssen, was den Preis des Systems im Ganzen erhöht. Dieses Verfahren lässt dabei die Erbringung der vorgegebenen Dienstleistung nicht registrieren, was zum Missbrauch führen kann. Das System selbst kann einen Betrug oder Missbrauch seitens des Bedieners der Tanksäule sowie seitens des diese Dienstleistung beim Bediener angefragten Fahrers nicht erkennen.

Die in ihrem technischen Wesen nächstliegende Lösung ist ein Verfahren zur multifaktoriellen Kombinationsidentifikation nach dem die Bedienung nur dann erfolgt, wenn Informationsträger vorhanden sind, die den Besitzer und seine Technik identifizieren. Um die Bedingung zu prüfen, die die Bedienung des Besitzers eines Informationsträgers und der damit verbundenen Technik voraussetzt, wird die Information von Informationsträgern mithilfe von Ablesevorrichtungen abgelesen. Wenn die im Datenverarbeiter vorgegebene Bedingung erfüllt ist, wird die vorgegebene Dienstleistung erbracht, oder eine Ware wird verkauft. Dabei erhält der Besitzer oder seine Technik die Dienstleistung nur, wenn die von den Informationsträgern des Besitzers und seiner Technik im Bedienungsbereich abgelesene Informationskombination mit der im Voraus vorgegebenen Informationskombination im Datenverarbeiter zum Zeitpunkt der Erbringung der Dienstleistung übereinstimmt. Der Besitzer eines Informationsträgers erhält zusätzlich einen Sensor zum Erkennen der Geräusche und/oder der Zuführung/Nichtzuführung des Treib- und Schmierstoffs in den Behälter der Technik. Der Sensor sendet die Information, die einen zusätzlichen Identifikationsfaktor eines Fahrzeugs darstellt. Der Sensor wird vom Besitzer im Voraus an die Technik in seinem Eigentum angebracht. Die Tatsache der Bedienung des Besitzers oder seiner Technik wird am Empfang/Fehlen der Information vom Sensor zum Erkennen der Geräusche und/oder zur Zuführung/Nichtzuführung des Treib- und Schmierstoffs in den Behälter der Technik (des Fahrzeugs) registriert. Darüber hinaus werden Fahrzeugmittel nach dem vollen Bestand der Identifikatoren identifiziert, z. B., wenn es drei Identifikatoren gibt, dann nach {M;N;P} oder nach der Information aus Paaren von Identifikatoren {M; P} oder nach der Information aus Paaren von Identifikatoren {N;P}, wobei P ein Identifikator des zusätzlichen Sensors zum Erkennen der Geräusche oder der Information über die Zuführung/Nichtzuführung des Brennstoffs in das Fahrzeug ist, die in den Datenverarbeiter übergeben werden. Es ist möglich, Fahrzeugmittel auch nur nach einem Merkmal P (d. h. Zuführung/Nichtzuführung des Treib- und Schmiermittels in den Behälter des Fahrzeugs) zu identifizieren.

Die ihrem technischen Wesen nach nächstliegende Lösung, die dieses Verfahren umsetzt, ist das Identifikationssystem das mehr als einen Informationsträger und mehr als eine Ablesevorrichtung enthält, die an einen Datenverarbeiter angeschlossen sind. Dabei gibt es im System einen zusätzlichen Informationsträger. Der Datenverarbeiter oder das Identifikationssystem sind mit einem Speicher und einer Vergleichseinrichtung ausgestattet, die mithilfe der Ablesevorrichtungen von mehr als einem Informationsträger abgelesene Informationssätze vergleichen lassen. Wenn die Informationskombination mit der früher gespeicherten/aufgezeichneten Informationskombination im Datenverarbeiter, die der Bedienungsbedingung entspricht, übereinstimmt, gibt das System ein Signal an die angeschlossene Betätigungseinrichtung. Um unberechtigtes Tanken zu erkennen (festzustellen), prüft das System die Daten über den Kilometerstand und die Menge des früher eingefüllten Brennstoffs durch die Verbindung mit einem Wegstreckenzähler des Fahrzeugs bzw. einer Navigationssatellitenverbindung. Dabei ist das System mit einem Sensor zum Erkennen akustischer/elektromagnetischer Geräusche/Schwingungen und/oder der Zuführung/Nichtzuführung des Treib- und Schmiermittels in einen Behälter des Fahrzeugs ausgerüstet. Dieser Sensor erkennt und registriert die Zuführung/Nichtzuführung des Treib- und Schmiermittels in den Behälter des Fahrzeugs und sendet eine Information, die einen zusätzlichen Identifikationsfaktor darstellt. Das System ist mit einer entsprechenden Einrichtung zur Übergabe der Information von einem solchen Sensor zum Datenverarbeiter ausgestattet. Der Sensor ist in Form eines Kehlkopfmikrofons, Mikrofons, Piezogebers, Schwingungsgebers, Sensors, Ultraschallgebers, Radioisotopengebers, Induktionsgebers, Wirbelstromgebers, Schwingungsgebers, elektromagnetischen Gebers ausgeführt, der am/im Behälter für Treib- und Schmiermittel oder an einer beliebigen Stelle des Fahrzeugs im engen Kontakt mit seinem Stahlgehäuse angebracht ist. Die Einrichtung für die Übergabe der digitalen oder analogen Information eines solchen Sensors sendet die Information über die Zuführung/Nichtzuführung des Treib- und Schmiermittels an den Datenverarbeiter drahtlos oder über eine Drahtverbindung.

Dieses Verfahren und dieses System überwachen die Erbringung der angefragten Dienstleistung und registrieren die Erfüllung der Dienstleistungen. Dies ermöglicht es, zusätzliche Bedingungen oder Faktoren während der Bedienung zu erfassen, z. B. die Ist-Zuführung/Nichtzuführung des Brennstoffs oder Öls, wenn die Zustimmung/Absage der Besitzer von Informationsträgern für die Bedienung vorliegt. Dies ermöglicht es auch zu prüfen, ob diesem Kunden mit dieser Technik erlaubt ist, die vorgegebene Dienstleistung zu erhalten oder die früher vorgegebene Dienstleistung (Kauf einer Ware) abhängig von zusätzlichen Bedingungen zu ändern. Dies ermöglicht es auch, eine zusätzliche Bestätigung des Bedarfs an der Dienstleistung nur für die Tankstellen einzuführen, die an das System der Identifikation und Kontrolle angeschlossen sind.

Dabei haben das genannte Verfahren und das System auch wesentliche Nachteile:
1. Das Identifikationssystem hat keinen Mechanismus der Adaptierung (Einstellung, Anpassung) dazu, dass unterschiedliche Vorrichtungen unterschiedliche physikalische Eigenschaften haben, die die Zuverlässigkeit der Identifikation der Technik beeinflussen. Darüber hinaus können sich physikalische Eigenschaften des Systems im Laufe des Betriebs ändern, was den Identifikationsvorgang wesentlich erschwert.
2. In dem Fall, wenn die Verbindung (GPRS, GSM, Internet, Funkkanal u.a.) mit einem für alle Tankstellen gemeinsamen Erfassungssystem oder einem Kartensystem, das dem Identifikationssystem Daten für die bestimmte Technik über vorgegebene Bedienungsbedingungen online übergibt, zeitweise oder dauernd fehlt, geben dieses Verfahren und dieses System keine Lösung, wie man eine gehörige Bedienung des Kunden an der Tankstelle überprüfen kann oder wie man Betrug durch Überhöhung des vorgegebenen Dienstleistungsumfangs, z. B. Tanken mehr als vorgegeben und zum falschen Preis, verhindern kann.
3. Dieses Verfahren und das System geben keinen Schutz gegen eine absichtliche Imitation des Sensorsignals zum Erkennen akustischer/elektromagnetischer Geräusche/Schwingungen und/oder der Zuführung/Nichtzuführung des Brennstoffs in den Behälter, was zu wesentlichen Verlusten des Brennstoffbesitzers führen kann.

Die Aufgabe der Erfindung ist die Entwicklung eines solchen Verfahrens zur adaptiven multifaktoriellen Kombinationsidentifikation bei der Erbringung von Dienstleistung, das es den Besitzern von Informationsträgern und eines solchen Systems für die Umsetzung des Verfahrens im automatisierten Kundenbedienungsprozess ermöglichen würde:
1. im Betrieb der Adaptierung (Einstellung, Anpassung) des Identifikationssystems an verschiedene technische Mittel verschiedene physikalische Eigenschaften der Technik, die die Zuverlässigkeit der Identifikation von der Technik beeinflussen, zu erfassen und zu berücksichtigen,
2. im Fall, wenn die Verbindung (GPRS, GSM, Internet, Funkkanal u. a.) mit einem für alle Tankstellen gemeinsamen Erfassungssystem oder einem Kartensystem, das dem Identifikationssystem Daten für die bestimmte Technik über vorgegebene Bedienungsbedingungen online übergibt, zeitweise oder dauernd fehlt, eine Möglichkeit zu geben, dem Kunden eine gehörige Bedienung an der Tankstelle zu gewähren und/oder einen Betrug durch Überhöhung des vorgegebenen Dienstleistungsumfangs zu verhindern,
3. einen Schutz gegen absichtliche Imitation akustischer/elektromagnetischer Geräusche/Schwingung und/oder der Zuführung/Nichtzuführung des Brennstoffs zu gewähren.

Das vorliegende Verfahren zur adaptiven multifaktoriellen Kombinationsidentifikation der Besitzer und der Technik an der Bedienungsstelle löst diese Aufgaben, da bei der Umsetzung dieses Verfahrens die Bedienung nur dann erfolgt, wenn Informationsträger vorhanden sind, die den Besitzer und die mit ihm verbundene Technik identifizieren. Um die für den Besitzer und seine Technik vorgegebene Bedienungsbedingung zu überprüfen, wird die Information von den Informationsträgern mithilfe von Ablesevorrichtungen abgelesen. Wenn die im Datenverarbeiter vorgegebene Bedingung erfüllt ist, wird die vorgegebene Dienstleistung erbracht oder eine bestimmte Ware verkauft. Die Bedienung des Besitzers oder seiner Technik erfolgt nur, wenn eine von den Informationsträgern des Besitzers und seiner Technik im Bedienungsbereich zum Zeitpunkt der Erbringung der Dienstleistung abgelesene Informationskombination mit der im Voraus im Datenverarbeiter vorgegebenen Informationskombination übereinstimmt. Darüber hinaus ist die Technik des Besitzers vom Informationsträger mit einem Sensor zum Erkennen akustischer/elektromagnetischer Geräusche/Schwingungen und/oder der Zuführung/Nichtzuführung des Treib- und Schmierstoffs in den Behälter der Technik ausgestattet. Dieser Sensor übergibt die Information, die einen zusätzlichen oder Hauptfaktor der Identifikation der Technik darstellt. Der Besitzer bringt diesen Sensor im Voraus an die Technik in seinem Eigentum fest an. Dabei wird die Bedienung des Besitzers oder seiner Technik am Empfang/Fehlen der Information des Sensors zum Erkennen akustischer/elektromagnetischer Geräusche/Schwingungen und/oder der Zuführung/Nichtzuführung des Treib- und Schmierstoffs in den Behälter der Technik registriert. Ein kennzeichnendes Merkmal eines solchen Verfahrens besteht darin, dass bei der Einstellung des Identifikationssystems zwecks Adaptierung des Systems für eine konkrete Technik die Information über die Ausführung dieser Technik in Form von Werten der akustischen/elektromagnetischen Geräusche/Schwingungen des Signals und/oder des Merkmals der Zuführung/Nichtzuführung des Treib- und Schmierstoffs in den Behälter der Technik eingetragen wird. Diese Information wird in die Adaptierungseinheit des Sensors zum Erkennen akustischer/elektromagnetischer Geräusche/Schwingungen und/oder der Zuführung/Nichtzuführung des Treib- und Schmierstoffs in den Behälter der Technik gespeichert. Der Sensor erkennt und registriert die Zuführung/Nichtzuführung des Treib- und Schmiermittels in den Behälter des Fahrzeugs und sendet eine Information, die einen zusätzlichen oder Hauptfaktor der Identifikation der Technik darstellt. Dieser Sensor ist an der Technik angebracht.

Dieses kennzeichnende Merkmal lässt eine zusätzliche Information bei der Identifikation des Besitzers und seiner Technik gewinnen. Dadurch kann auch die Zuverlässigkeit der Identifikation von einer konkreten Technik, die die Bedienung braucht, erhöht werden. Dabei ist die konkrete Dienstleistung von der Ausführung der Technik abhängig. Das garantiert mit größerer Wahrscheinlichkeit, dass ein Treib- und Schmierstoff einer konkreten Technik zugeführt wird. Damit wird möglicher Missbrauch verhindert, wie z.B. das Betanken eines fremden Fahrzeugs.

Das zweite kennzeichnende Merkmal des Verfahrens gemäß der Erfindung zur adaptiven multifaktoriellen Kombinationsidentifikation der Besitzers und der Technik an der Bedienungsstelle besteht darin, dass, wenn die Verbindung der Bedienungsstelle mit dem Operationszentrum des Kartensystems oder einem zentralisierten Überwachungssystem fehlt und/oder um das Risiko einer Blockierung der Bedienung der Technik und/oder des Betrugs oder Missbrauchs während der Bedienung, z.B. Überhöhung des vorgegebenen Dienstleistungsumfangs zu verhindern, ist der Sensor zum Erkennen akustischer/elektromagnetischer Geräusche/Schwingungen und/oder der Zuführung/Nichtzuführung des Treib- und Schmierstoffs in den Behälter der Technik im Voraus mit einer Speichereinheit ausgerüstet. Dieser Sensor erkennt oder registriert die Zuführung/Nichtzuführung des Treib- und Schmierstoffs in den Behälter und liefert die Information, die einen zusätzlichen oder Hauptfaktor für die Identifikation der Technik darstellt. Der Sensor ist an der Technik angebracht. In der Speichereinheit des Sensors werden die Daten über bestimmte oder früher erbrachte Dienstleistungen gespeichert. Diese Daten sind für das Funktionieren des Identifikationssystems notwendig. Dabei wird die Speichereinheit des Sensors während der Bedienung an den Datenverarbeiter angeschlossen. Somit erhält das Identifikationssystem die Daten über vorgegebene oder früher erbrachte Dienstleistungen. Nach der Bedienung wird die Information in der Speichereinheit aktualisiert/geändert.

Dieses kennzeichnende Merkmal des Verfahrens ermöglicht die Bedienung der Technik, auch wenn die Verbindung (GPRS, GSM, Internet, Funkkanal u. a.) der Bedienungsstelle, z. B. einer Tankstelle, mit einem für alle Bedienungsstellen, z. B. Tankstellen, gemeinen Erfassungssystem oder einem Kartensystem fehlt, das dem Identifikationssystem Daten für konkrete Technik über vorgegebene Bedienungsbedingungen online übergibt. Das gibt dazu die Möglichkeit, eine eventuelle Blockierung der Bedienung der Technik und/oder Missbrauch oder Betrug durch Überhöhen des vorgegebenen Dienstleistungsumfangs zu verhindern. Dies erhöht wiederum die Zuverlässigkeit der Arbeit und macht das System der automatisierten Identifikation einfacher und günstiger.

Das dritte kennzeichnende Merkmal des vorliegenden Verfahrens zur adaptiven multifaktoriellen Kombinationsidentifikation der Besitzers und der Technik an der Bedienungsstelle besteht darin, dass das Identifikationssystem mit einem Zufallsgenerator ausgerüstet ist, welcher die Brennstoffzuführung von der Tanksäule in zufälligen Momenten durch Erzeugung eines Abschaltsignals abschalten kann, um einen Betrug bei der Bedienung durch eine Imitation des Sensorsignals zum Erkennen akustischer/elektromagnetischer Geräusche/Schwingungen und/oder der Zuführung/Nichtzuführung des Treib- und Schmierstoffs in den Behälter der Technik zu verhindern. Der Sensor übergibt die Information, die einen zusätzlichen oder Hauptfaktor der Identifikation der Technik darstellt. Der Besitzer bringt diesen Sensor im Voraus an seiner Technik an. Bei der Bedienung der Technik wird eine weitere Bedienung blockiert, wenn ein Signal des Sensors zum Erkennen akustischer/elektromagnetischer Geräusche/Schwingungen und/oder der Zuführung/Nichtzuführung des Treib- und Schmierstoffs in den Behälter der Technik beim Vorliegen eines Abschaltsignals der Brennstoffzuführung vom Zufallsgenerator ankommt, welcher ausgebildet ist die Brennstoffzuführung von der Tanksäule in zufälligen Momenten durch Erzeugung eines Abschaltsignals abzuschalten.

Dieses kennzeichnende Merkmal des vorliegenden Verfahrens zur adaptiven multifaktoriellen Kombinationsidentifikation der Besitzer und der Technik an der Bedienungsstelle gewährt Schutz gegen eine absichtliche Imitation des Signals vom Sensor zum Erkennen akustischer/elektromagnetischer Geräusche/Schwingungen und/oder der Zuführung/Nichtzuführung des Treib- und Schmierstoffs in den Behälter der Technik. Dies ermöglicht es, bei der Bedienung einen Schaden durch Betrug und Diebstahl von Verbrauchsstoff, z. B. Brennstoff, auszuschließen. Das erhöht ferner die Zuverlässigkeit des Systems im Ganzen.

Das vorliegende System für die Umsetzung des Verfahrens zur adaptiven multifaktoriellen Kombinationsidentifikation der Besitzer und ihrer Technik (Fahrzeuge) an der Bedienungsstelle löst auch die gestellte Aufgabe, indem dieses System mehr als einen Informationsträger und mehr als eine Ablesevorrichtung enthält, die an einen Datenverarbeiter angeschlossen sind. Außerdem enthält das System einen Sensor zum Erkennen akustischer/elektromagnetischer Geräusche/Schwingungen und/oder der Zuführung/Nichtzuführung des Treib- und Schmierstoffs in den Behälter der Technik. Dieser Sensor erkennt oder registriert, ob ein Treib- und Schmierstoff in den Behälter der Technik zugeführt bzw. nicht zugeführt wird. Der Sensor übergibt die Information, die einen zusätzlichen Faktor der Identifikation der Technik darstellt.

Das System enthält ferner eine entsprechende Einrichtung zur Übergabe der Information von einem solchen Sensor zum Datenverarbeiter. Das kennzeichnende Merkmal dieses Systems besteht darin, dass der Sensor zum Erkennen akustischer/elektromagnetischer Geräusche/Schwingungen und/oder der Zuführung/Nichtzuführung des Treib- und Schmierstoffs in den Behälter der Technik, der erkennt oder registriert, ob ein Treib- und Schmierstoff in den Behälter der Technik zugeführt bzw. nicht zugeführt wird, der Information übergibt, die einen zusätzlichen Faktor der Identifikation der Technik darstellt und der einen zusätzlichen Informationsträger darstellt und an der Technik angebracht ist, eine Adaptierungseinheit hat. Die Adaptierungseinheit ermöglicht bei der Einstellung zwecks Adaptierung für die Arbeit mit einem konkreten Fahrzeug die Anpassung an Identifikationsparameter. Diese Identifikationsparameter hängen von der Ausführung des Fahrzeugs ab und werden vom Sensor zum Erkennen akustischer/elektromagnetischer Geräusche/Schwingungen und/oder der Zuführung/Nichtzuführung des Treib- und Schmierstoffs in den Behälter der Technik übergeben.

Dieses kennzeichnende Merkmal erlaubt dem System der automatisierten Identifikation, eine zusätzliche von der Ausführung des Fahrzeugs abhängige Information für Identifikationszwecke zu erhalten und die Zuverlässigkeit der Identifikation von konkreten Fahrzeugen zu erhöhen, die die Bedienung brauchen. Das garantiert mit grö-βerer Wahrscheinlichkeit, dass ein Treib- und Schmierstoff einer konkreten Technik zugeführt wird. Damit wird ein möglicher Missbrauch verhindert.

Das zweite kennzeichnende Merkmal besteht darin, dass der Sensor zum Erkennen akustischer/elektromagnetischer Geräusche/Schwingungen und/oder der Zuführung/Nichtzuführung des Treib- und Schmierstoffs in den Behälter der Technik, der die Zuführung/Nichtzuführung des Treib- und Schmierstoffs in den Behälter erkennt oder registriert und der die Information liefert, die einen zusätzlichen Faktor für die Identifikation von Fahrzeugen darstellt und der an Fahrzeugen angebracht ist, im Voraus mit einer Speichereinheit ausgerüstet ist. Diese Speichereinheit wird bei der Bedienung eines Fahrzeugs an den Datenverarbeiter angeschlossen. Dabei werden die Daten über vorbestimmte oder früher erbrachte Dienstleistungen übertragen und in der Speichereinheit nach Beendigung der Bedienung aktualisiert, falls die Verbindung mit einem für alle Tankstellen gemeinsamen Erfassungssystem oder einem Kartensystem oder einem gemeinsamen System der multifaktoriellen Kombinationsidentifikation fehlt. Somit wird eine Möglichkeit gegeben, die Bedienung von Fahrzeugen eventuell zu blockieren und/oder einen Betrug und Missbrauch mit dem vorgegebenen Dienstleistungsumfang während der Bedienung zu verhindern.

Dieses kennzeichnende Merkmal erlaubt dem System der automatisierten Identifikation seine Funktionen zu erfüllen, auch wenn die Verbindung (GPRS, GSM, Internet, Funkkanal u. a.) mit einem für alle Tankstellen gemeinsamen Erfassungssystem oder einem Kartensystem fehlt, das dem Identifikationssystem Bedienungsbedingungen für alle Fahrzeugmittel online liefert. Das gibt dazu die Möglichkeit, eine eventuelle Blockierung der Bedienung von Fahrzeugen zu gewähren und/oder einen Missbrauch oder Betrug durch Überhöhung des vorgegebenen Dienstleistungsumfangs während der Bedienung zu verhindern.

Das dritte kennzeichnende Merkmal besteht darin, dass das Identifikationssystem zusätzlich mit einem Zufallsgenerator ausgerüstet ist, welcher die Brennstoffzuführung von der Tanksäule in zufälligen Momenten durch Erzeugung eines Abschaltsignals abschalten kann. Dieser Zufallsgenerator ist an den Datenverarbeiter und an die Betätigungseinrichtung der Tanksäulensteuerung angeschlossen. Die Bedienung des Fahrzeugs wird durch das Identifikationssystem bei der Bedienung eines Fahrzeugs (Tanken) im Fall einer zufallsmäßigen Abschaltung der Zuführung von Brennstoff von der Tanksäule blockiert, wenn ein Signal des Sensors zum Erkennen akustischer/elektromagnetischer Geräusche/Schwingungen und/oder der Zuführung/Nichtzuführung des Treib- und Schmierstoffs in den Behälter des Fahrzeugs trotz des Vorliegens eines Abschaltsignals vom Zufallsgenerator in einem zufälligen Moment, bezüglich der Brennstoffzuführung der Tanksäule weiter ankommt.

Dieses kennzeichnende Merkmal lässt das Identifikationssystem Schutz gegen eine absichtliche Imitation eines Sensorsignals zum Erkennen akustischer/elektromagnetischer Geräusche/Schwingungen und/oder der Zuführung/Nichtzuführung des Treib- und Schmierstoffs in den Behälter der Technik gewähren. Das erhöht ferner die Zuverlässigkeit des Systems im Ganzen und schützt es gegen Missbrauch und Betrug.

Das vorliegende Verfahren zur adaptiven multifaktoriellen Kombinationsidentifikation und das vorliegende System für die Umsetzung des Verfahrens sind neu, da keine ähnlichen Lösungen dem Erfinder und Anmelder zum Anmeldetag aus zugänglichen Informationsquellen bekannt sind.

Das vorliegende Verfahren zur adaptiven multifaktoriellen Kombinationsidentifikation und das vorliegende System für die Umsetzung des Verfahrens sind erfinderisch, da kein Fachmann auf diesem Gebiet der Technik zum Anmeldetag eine ähnliche Lösung vorgeschlagen hat, die die beschriebenen Systemfunktionen mit minimalen Investitionen umsetzt und signifikante Möglichkeiten der Bedienung von Informationsträgern bietet.

Das vorliegende Verfahren zur adaptiven multifaktoriellen Kombinationsidentifikation und das vorliegende System für dessen Umsetzung sind gewerblich anwendbar, da kein Zweifel bezüglich der Umsetzungsmöglichkeiten in der Industrie und im Haushalt handwerksmäßig besteht.

Die vorliegenden Lösungen in beliebiger Ausführungsform der erfinderischen Idee können industriell mit dem Einsatz von herkömmlichen Mitteln umgesetzt werden, die aus Informationsquellen (aus dem Bereich der Informationstechnik) bekannt sind.

Das vorliegende Verfahren zur adaptiven multifaktoriellen Kombinationsidentifikation und das vorliegende System für dessen Umsetzung werden anhand von Zeichnungen näher erläutert und stellen schematisch dar:
- Fig. 1: ein System, das das Verfahren zur adaptiven multifaktoriellen Kombinationsidentifikation von Fahrzeugen an Tankstellen bei der Wahl eines Fahrzeugs und der Bedienungsbedingungen (Menge von Litern zum Tanken) umsetzt und
- Fig. 2: einen schematischen Aufbau des Sensors 3 zum Erkennen akustischer/elektromagnetischer Geräusche/Schwingungen und/oder der Zuführung/Nichtzuführung des Treib- und Schmierstoffs in den Behälter der Technik.

Kurz gefasst besteht das vorliegende Verfahren zur adaptiven multifaktoriellen Kombinationsidentifikation von Besitzern und Technik an Bedienungsstellen darin, dass die Bedienung nur dann erfolgt, wenn es Informationsträger gibt, die den Besitzer und seine Technik identifizieren. Um die Bedienungsbedingung des Besitzers von einem Informationsträger und der damit verbundenen Technik zu prüfen, werden Daten auf Informationsträgern mithilfe von Ablesevorrichtungen abgelesen. Wenn eine vorgegebene Bedingung, die im Datenverarbeiter gespeichert ist, erfüllt ist, erfolgt die vorgegebene Bedienung oder der Verkauf einer Ware. Dabei erhält der Besitzer oder seine Technik eine Dienstleistung nur, wenn die von den Informationsträgern des Besitzers und seiner Technik im Bedienungsbereich bei der Bedienung abgelesene Informationskombination mit der im Voraus vorgegebenen Informationskombination im Datenverarbeiter übereinstimmt, die der Bedienungsbedingung entspricht. Darüber hinaus ist die Technik des Besitzes eines Informationsträgers mit einem Sensor zum Erkennen akustischer/elektromagnetischer Geräusche/Schwingungen und/oder der Zuführung/Nichtzuführung des Treib- und Schmierstoffs in den Behälter der Technik ausgestattet. Dieser Sensor liefert die Information, die einen zusätzlichen oder Hauptidentifikationsfaktor eines Fahrzeugs darstellt. Der Besitzer bringt den Sensor im Voraus an der Technik in seinem Eigentum an. Die Tatsache der Bedienung des Besitzers oder seiner Technik wird am Empfang/Fehlen der Information des Sensors zum Erkennen akustischer/elektromagnetischer Geräusche/Schwingungen und/oder der Zuführung/Nichtzuführung des Treib- und Schmierstoffs in den Behälter der Technik registriert. Bei der Einstellung des Identifikationssystems zwecks Adaptierung des Systems für eine konkrete Technik wird eine Information über die Ausführung dieser Technik in der Adaptierungseinheit des Sensors gespeichert, und zwar in Form von Werten der akustischen/elektromagnetischen Geräusche/Schwingungen des Signals und/oder des Merkmals der Zuführung/Nichtzuführung des Verbrauchsmaterials, z. B. eines Treib- und Schmierstoffs, in den Behälter der Technik. Der genannte Sensor dient zum Erkennen akustischer/elektromagnetischer Geräusche/Schwingungen und/oder der Zuführung/Nichtzuführung des Treib- und Schmierstoffs in den Behälter der Technik. Dieser Sensor erkennt oder registriert die Zuführung/Nichtzuführung des Treib- und Schmierstoffs in den Behälter der Technik. Dieser Sensor übergibt die Information, die einen zusätzlichen oder Hauptfaktor der Identifikation der Technik darstellt, und ist an der Technik angebracht. Für eventuelle Fälle, wenn die Verbindung der Bedienungsstelle mit dem Operationszentrum des Kartensystems oder einem zentralisierten Überwachungssystem fehlt, und/oder um das Risiko der eventuellen Blockierung der Bedienung auszuschließen und/oder um das Risiko des Betrugs oder Missbrauchs während der Bedienung, z. B. Überhöhung des vorgegebenen Dienstleistungsumfangs, zu verhindern, wird der Sensor im Voraus mit einer Speichereinheit ausgerüstet. Der Sensor dient zum Erkennen akustischer/elektromagnetischer Geräusche/Schwingungen und/oder der Zuführung/Nichtzuführung des Treib- und Schmierstoffs in den Behälter der Technik. Dieser Sensor erkennt oder registriert die Zuführung/Nichtzuführung des Treib- und Schmierstoffs in den Behälter. Ferner liefert der Sensor die Information, die einen zusätzlichen oder Hauptfaktor für die Identifikation der Technik darstellt, und ist an der Technik angebracht. In der Speichereinheit werden Daten über die im Voraus bestimmten Dienstleistungen gespeichert, die für das Funktionieren des Identifikationssystems notwendig sind. Während der Bedienung wird die Speichereinheit des Sensors an den Datenverarbeiter angeschlossen. Somit erhält das Identifikationssystem die Daten über die im Voraus bestimmten Dienstleistungen. Nach der Bedienung wird die Information in der Speichereinheit aktualisiert/geändert. Darüber hinaus, um einen Betrug bei der Bedienung durch eine Imitation eines Sensorsignals zu verhindern, wird das Identifikationssystem im Voraus mit einem Zufallsgenerator ausgerüstet, welcher die Brennstoffzuführung von der Tanksäule in zufälligen Momenten durch Erzeugung eines Abschaltsignals abschalten kann. Der genannte Sensor dient zum Erkennen akustischer/elektromagnetischer Geräusche/Schwingungen und/oder der Zuführung/Nichtzuführung des Treib- und Schmierstoffs in den Behälter der Technik. Dieser Sensor übergibt die Information, die einen zusätzlichen oder Hauptfaktor der Identifikation der Technik darstellt, und wird vom Besitzer im Voraus an der Technik des Besitzers angebracht. Bei der Bedienung der Technik wird eine weitere Bedienung blockiert, wenn ein Signal vom Sensor zum Erkennen akustischer/elektromagnetischer Geräusche/Schwingungen und/oder der Zuführung/Nichtzuführung des Treib- und Schmierstoffs in den Behälter der Technik ankommt. Dies geschieht beim Vorliegen eines Abschaltsignals der Brennstoffzuführung vom Zufallsgenerator, welcher die Brennstoffzuführung von der Tanksäule in zufälligen Momenten durch Erzeugung eines Abschaltsignals abschalten kann.

### Kurzfassung des Systems zur Umsetzung des vorliegenden Verfahrens

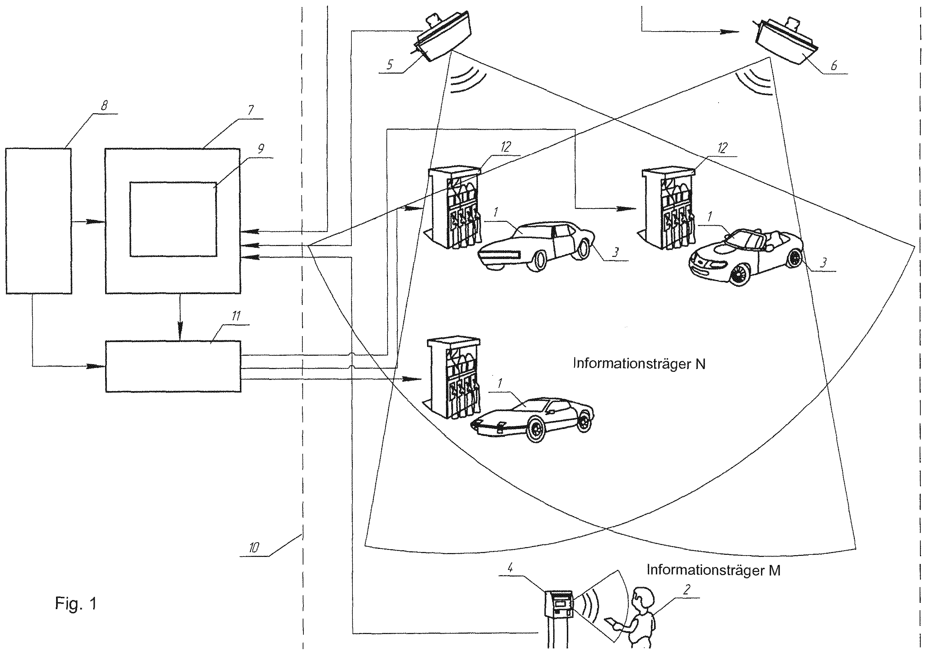

Das Wesen des Systems zur Umsetzung des vorliegenden Verfahrens besteht darin, dass das genannte System folgende Komponenten aufweist (s. Fig. 1):
- mehr als einen Informationsträger 1, der die Technik identifiziert,
- einen zusätzlichen Informationsträger 2, der den Technikbesitzer identifiziert,
- einen Sensor 3 zum Erkennen akustischer/elektromagnetischer Geräusche/Schwingungen und/oder der Zuführung/Nichtzuführung des Treib- und Schmierstoffs in den Behälter der Technik, der die Erbringung der Dienstleistung erkennt,
- und mehr als eine Ablesevorrichtung 4, 5, 6, die Daten aus einem entsprechenden Informationsträger ablesen und an einen Datenverarbeiter 7 angeschlossen sind,
- sowie einen Zufallsgenerator 7, welcher die Brennstoffzuführung von der Tanksäule in zufälligen Momenten durch Erzeugung eines Abschaltsignals abschalten kann .

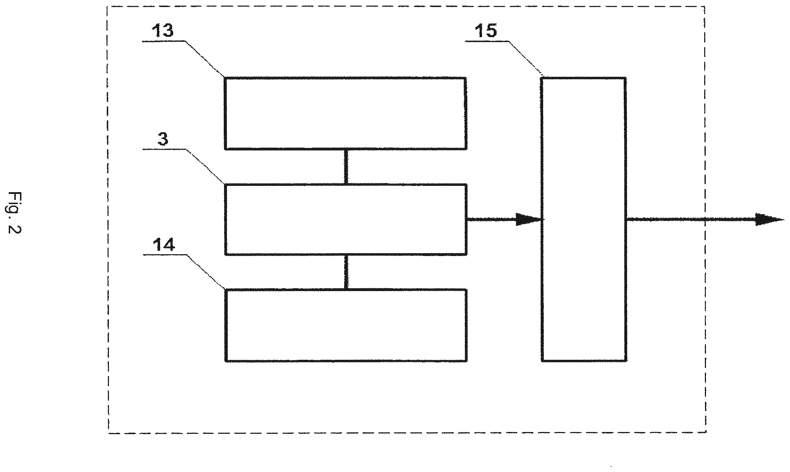

Der Datenverarbeiter 7 oder das System der multifaktoriellen Kombinationsidentifikation ist mit einer Vergleichseinheit 9 ausgerüstet. Diese ermöglicht es, Informationssätze zu vergleichen, die mithilfe der Ablesevorrichtungen 4, 5, 6 von mehr als einem Informationsträger 1, einem zusätzlichen Informationsträger 2 und einem Sensor 4 abgelesen sind. Der Sensor 4 liefert die Information über die Zuführung oder Nichtzuführung des Brennstoffs in den Behälter. Die genannte Information stellt einen zusätzlichen Faktor für die Identifikation der Technik im Bedienungsbereich 10 dar. Wenn die abgelesene Informationskombination mit einer früher gespeicherten/aufgezeichneten Informationskombination im Datenverarbeiter 7, die der Bedienungsbedingung entspricht, übereinstimmt, gibt das System ein Signal an die angeschlossene Betätigungseinrichtung 11 der Tanksäule 12. Dabei hat der Sensor 3 zum Erkennen akustischer/elektromagnetischer Geräusche/Schwingungen und/oder der Zuführung/Nichtzuführung des Treib- und Schmierstoffs in den Behälter der Technik, wie in Fig. 2 dargestellt, eine angeschlossene Adaptierungseinheit 13 und eine Speichereinheit 14. Die Adaptierungseinheit 13 und die Speichereinheit 14 liefern die Daten über eine entsprechende Datenübertragungseinheit 15 an die Ablesevorrichtungen 5, 6 (Fig. 1).

### Kurzbeschreibung der Anwendung des vorliegenden Verfahrens und des Systems

Das vorliegende Verfahren zur adaptiven multifaktoriellen Kombinationsidentifikation von Besitzern und Technik an einer Bedienungsstelle besteht darin, dass die Bedienung nur dann erfolgt, wenn die Informationsträger 1 und 2 vorhanden sind, die den Besitzer und die mit ihm verbundene Technik erkennen. Um eine Bedienungsbedingung zu prüfen, die für den Besitzer des Informationsträgers und der mit ihm verbundenen Technik vorgegeben ist, liest man die Informationen von den Informationsträgern 1 und 2 mithilfe der Ablesevorrichtungen 4, 5 und 6 ab, die sich an verschiedenen Bereichen der Bedienungsstelle befinden (s. Fig. 1). Wenn eine im Voraus im Datenverarbeiter 7 vorgegebene Bedienungsbedingung erfüllt ist, wird eine vorbestimmte Dienstleistung erbracht oder eine Ware verkauft. Dabei erhält der Besitzer oder seine Technik eine Dienstleistung nur dann, wenn eine Informationskombination, die von den Informationsträgern 1 und 2 des Besitzers und seiner Technik im Bedienungsbereich 10 zum Zeitpunkt der Bedienung abgelesen ist, mit einer im Datenverarbeiter 7 vorgegebenen Informationskombination übereinstimmt, die der Bedienungsbedingung entspricht. Darüber hinaus ist die Technik des Besitzers eines Informationsträgers mit dem Sensor 3 zum Erkennen akustischer/elektromagnetischer Geräusche/Schwingungen und/oder der Zuführung/Nichtzuführung des Treib- und Schmierstoffs in den Behälter der Technik ausgerüstet. Der genannte Sensor liefert die Information, die einen zusätzlichen/Hauptfaktor für die Identifikation der Technik darstellt, und ist vom Besitzer an der mit ihm verbundenen Technik angebracht. Fälle der Bedienung des Besitzers oder seiner Technik werden am Empfang/Fehlen der Information vom Sensor 3 zum Erkennen akustischer/elektromagnetischer Geräusche/Schwingungen und/oder der Zuführung/Nichtzuführung des Treib- und Schmierstoffs in den Behälter der Technik erfasst. Bei der Einstellung des Identifikationssystems zwecks Adaptierung des Systems für eine konkrete Technik werden Daten über die Ausführung dieser Technik in der Adaptierungseinheit 13 des Sensors 3 gespeichert, und zwar in Form von Werten der akustischen/elektromagnetischen Geräusche/Schwingungen des Signals und/oder des Merkmals der Zuführung/Nichtzuführung des Treib- und Schmierstoffs in den Behälter der Technik. Der genannte Sensor 3 dient zum Erkennen akustischer/elektromagnetischer Geräusche/Schwingungen und/oder der Zuführung/Nichtzuführung des Treib- und Schmierstoffs in den Behälter der Technik. Der Sensor 3 erkennt oder registriert die Zuführung/Nichtzuführung des Brennstoffs in den Behälter der Technik. Dieser Sensor 3 liefert die Information, die einen zusätzlichen/Hauptfaktor der Identifikation von der Technik darstellt, und ist an der Technik angebracht. Für eventuelle Fälle, wenn die Verbindung der Bedienungsstelle mit dem Operationszentrum des Kartensystems oder einem zentralisierten Überwachungssystem fehlt, und/oder um die Blockierung der Bedienung der Technik auszuschlie-βen und/oder um das Risiko eines Betrugs oder Missbrauchs während der Bedienung, z. B. Überhöhung des vorgegebenen Dienstleistungsumfangs, zu verhindern, wird der Sensor 3 im Voraus mit einer Speichereinheit 14 ausgerüstet. Der Sensor 3 dient zum Erkennen akustischer/elektromagnetischer Geräusche/Schwingungen und/oder der Zuführung/Nichtzuführung des Treib- und Schmierstoffs in den Behälter der Technik. Der genannte Sensor 3 erkennt oder registriert die Zuführung/Nichtzuführung des Treib- und Schmierstoffs in den Behälter. Dieser Sensor 3 liefert die Information, die einen zusätzlichen oder Hauptfaktor für die Identifikation der Technik darstellt, und ist an der Technik angebracht. In der Speichereinheit 14 werden die Daten über die im Voraus bestimmten Dienstleistungen gespeichert. Diese Daten sind für das Funktionieren des Identifikationssystems notwendig. Während der Bedienung wird die Speichereinheit 14 des Sensors 3 an den Datenverarbeiter 7 angeschlossen. Somit erhält das Identifikationssystem die Daten über die vorbestimmten Dienstleistungen. Nach der Bedienung wird die Information in der Speichereinheit aktualisiert oder geändert. Um einen Betrug bei der Bedienung durch eine Imitation eines Sensorsignals 3 zu verhindern, wird das Identifikationssystem im Voraus mit einem Zufallsgenerator 8 ausgerüstet, welcher die Brennstoffzuführung von der Tanksäule in zufälligen Momenten durch Erzeugung eines Abschaltsignals abschalten kann. Der genannte Sensor 3 dient zum Erkennen akustischer/elektromagnetischer Geräusche/Schwingungen und/oder der Zuführung/Nichtzuführung des Treib- und Schmierstoffs in den Behälter der Technik. Der Sensor 3 liefert die Information, die einen zusätzlichen oder Hauptfaktor der Identifikation der Technik darstellt. Dieser Sensor 3 ist vom Besitzer im Voraus an der Technik des Besitzers angebracht. Bei der Bedienung der Technik wird eine weitere Bedienung blockiert, wenn ein Signal vom Sensor ankommt. Dies geschieht beim Vorliegen eines Abschaltsignals der Brennstoffzuführung vom Zufallsgenerator 8 welcher ausgebildet ist, die Brennstoffzuführung von der Tanksäule in zufälligen Momenten durch Erzeugung eines Abschaltsignals abzuschalten. Der genannte Sensor 3 dient zum Erkennen akustischer/elektromagnetischer Geräusche/Schwingungen und/oder der Zuführung/Nichtzuführung des Treib- und Schmierstoffs in den Behälter der Technik.

Wird die Entscheidung über die Bedienung (Tanken eines Fahrzeugs) nur nach der Informationskombination {M;N} (Identifikatoren) 1 und 2, die im Datenverarbeiter 7 des Identifikationssystems im Voraus gespeichert ist, getroffen, so gibt es unter Berücksichtigung des menschlichen Faktors (Betrugsversuche) keinen Schutz gegen Versuche, einen anderen und nicht das identifizierte Fahrzeug zu tanken. Es ist aber möglich, einen zusätzlichen Faktor der Identifikation P im Datenverarbeiter 7 vorzugeben und die Kontrolle über drei Faktoren der Identifikation {M;N;P}, einschließlich der zusätzlichen Daten über das Tanken eines bestimmten Fahrzeugs, zu führen, wobei:
M ein Zahlenwert eines der Identifikatoren vom Faktor M des Systems der multifaktoriellen Kombinationsidentifikation (z. B. Identifikator der Fahrerkarte) ist,
N ein Zahlenwert eines der Identifikatoren vom Faktor N des Systems der multifaktoriellen Kombinationsidentifikation (z. B. Identifikator des Fahrzeugs in Form eines Zeichens auf der Frontscheibe des Fahrzeugs) ist und P ein Zahlenwert eines der Identifikatoren vom Faktor P, z. B. Information vom Sensor zum Erkennen von Geräuschen/Schwingungen und/oder Merkmalen von der Zuführung/Nichtzuführung des Treib- und Schmierstoffes in ein bestimmtes Fahrzeug, ist.

Um bei der Bedienung der Technik zu prüfen, ob ein bestimmtes Fahrzeug getankt wird, löst der Zufallsgenerator 8 welcher die Brennstoffzuführung von der Tanksäule 12 in zufälligen Momenten durch Erzeugung eines Abschaltsignals abschalten kann, ein Abschaltsignal zu einem zufälligen Zeitpunkt aus. Wenn die Information des Sensors 3 zum Erkennen akustischer/elektromagnetischer Geräusche/Schwingungen und/oder der Merkmale von der Zuführung/Nichtzuführung des Treib- und Schmierstoffs in den Behälter der Technik weiter ankommt, wird die Bedienung blockiert. Kommt keine Information vom Sensor 3 zum Erkennen akustischer/elektromagnetischer Geräusche/Schwingungen und/oder der Merkmale von der Zuführung/Nichtzuführung des Treib- und Schmierstoffs in den Behälter der Technik an, bedeutet das, dass ein Treib- und Schmierstoff dem Tank der zu bedienenden Technik weiter nicht zugeführt wird. In diesem Fall wird die Entscheidung getroffen, dass eine richtig erkannte (identifizierte) Technik bedient wird, und die Zuführung des Brennstoffs von der Tanksäule 12 fängt wieder an. Diese Methode ermöglicht eine zusätzliche Identifikation der Technik mit dem Ziel, Schutz gegen eventuelle Versuche, das Funktionieren des Sensors 3 zum Erkennen von Geräuschen/Schwingungen und/oder Merkmalen von der Zuführung/Nichtzuführung des Treib- und Schmierstoffs, z. B. Brennstoffs, in den Behälter der Technik, der als zusätzlicher Identifikator dient, zu imitieren.

Wenn die Verbindung der Bedienungsstelle mit dem Operationszentrum des Kartensystems oder einem zentralisierten Überwachungssystem zum Zeitpunkt der Bedienung fehlt, dann wird, um das Risiko der Blockierung der Bedienung und/oder des Betrugs oder Missbrauchs der vorgegebenen Dienstleistungen während der Bedienung durch Überhöhung des vorgegebenen Dienstleistungsumfangs (z. B. einen anderen Brennstoff tanken, mit anderem Tageslimit oder Rabatt usw.) zu verhindern, zum Zeitpunkt der Bedienung die Speichereinheit 14 des Sensors 3 zum Erkennen akustischer/elektromagnetischer Geräusche/Schwingungen und/oder der Zuführung/Nichtzuführung des Treib- und Schmierstoffs, z. B. Brennstoffs, in den Behälter der Technik an den Datenverarbeiter 7 angeschlossen. Somit erhält das Identifikationssystem die Daten über die vorgegebenen Dienstleistungen. Nach der Bedienung wird die Information in der Speichereinheit 14 aktualisiert/geändert.

Die Umsetzung des vorliegenden Verfahrens und Systems garantiert, dass nur richtig identifizierte Fahrzeuge tanken können, und der menschliche Faktor ausgeschlossen ist.

Das vorliegende Verfahren und System minimieren das Risiko des Missbrauchs bei der Bedienung der Fahrzeuge.

Das vorliegende Verfahren bzw. das System können bei der Bedienung von Fahrzeugen an Tankstellen eingesetzt werden.

### Beispiel

Bedienung der Kunden an Tankstellen.

Kunden der Tankstellen (juristische Personen), die über eine eigene Fahrzeugflotte verfügen, bezahlen das Tanken ihrer Fahrzeuge im Voraus und sind daran interessiert, dass der bezahlte Brennstoff nur in ihre Fahrzeuge getankt wird. Die Identifikatoren 1 an den Frontscheiben der Fahrzeuge lassen Fahrzeuge erkennen, garantieren aber nicht, dass nur bestimmte Fahrzeuge tanken werden. Der Sensor 3 zum Erkennen akustischer/elektromagnetischer Geräusche/Schwingungen und/oder der Zuführung/Nichtzuführung des Treib- und Schmierstoffs in den Behälter der Technik mit der zusätzlichen Adaptierungseinheit 12 und der Speichereinheit 14 erkennt das Fahrzeug und registriert die Tatsache, dass ein bestimmtes Fahrzeug getankt hat, und verhindert zusammen mit dem Zufallsgenerator 8 welcher die Brennstoffzuführung von der Tanksäule 12 in zufälligen Momenten durch Erzeugung eines Abschaltsignals abschalten kann einen eventuellen Missbrauch und ein Betanken von nicht identifizierten Fahrzeugen.

## Patentansprüche

1. Verfahren zur adaptiven multifaktoriellen Kombinationsidentifikation von Besitzern und deren Technik, nämlich ein Fahrzeug, an einer Bedienungsstelle, nämlich einer Tanksäule (12), mittels eines Identifikationssystems, bei dem eine Bedienung nur dann erfolgt, wenn Informationsträger (1, 2) als ein erster Faktor der Identifikation vorhanden sind, die den Besitzer und die mit ihm verbundene Technik identifizieren, wobei
- zur Überprüfung der für den Besitzer und seine Technik vorgegebenen Bedienungsbedingung eine Information von den Informationsträgern (1, 2) mithilfe von Ablesevorrichtungen (4, 5, 6) in einem Datenverarbeiter (7) abgelesen wird,
- bei Erfüllung einer in einem Datenverarbeiter (7) vorgegebenen Bedingung die vorgegebene Dienstleistung, nämlich die Abgabe eines Treib- und Schmierstoffs erbracht, also dieser verkauft wird,
- die Bedienung des Besitzers oder seiner Technik nur dann erfolgt, wenn eine von den Informationsträgern (1, 2) des Besitzers und seiner Technik im Bedienungsbereich (10) abgelesene Informationskombination zum Zeitpunkt der Bedienung mit der im Voraus im Datenverarbeiter (7) vorgegebenen Informationskombination übereinstimmt, die der Bedienungsbedingung entspricht,
- die Technik des Besitzers vom Informationsträger (1, 2) mit einem Sensor (3) zum Erkennen akustischer/elektromagnetischer Geräusche/Schwingungen und/oder einer Zuführung/Nichtzuführung des Treib- und Schmierstoffs in einen Behälter der Technik ausgestattet ist, der eine Information übergibt, die einen zweiten Faktor der Identifikation der Technik darstellt, und der Besitzer den Sensor (3) im Voraus an der Technik in seinem Besitz angebracht hat,
und
- die Bedienung des Besitzers oder seiner Technik am Empfang/Fehlen der Information vom genannten Sensor (3) zum Erkennen akustischer/elektromagnetischer Geräusche/Schwingungen und/oder der Zuführung/Nichtzuführung des Treib- und Schmierstoffs in den Behälter der Technik registriert wird,
wobei bei der Einstellung des Identifikationssystems zwecks Adaptierung des Systems für eine konkrete Technik eine Information über die Ausführung dieser Technik in Form von Werten der akustischen/elektromagnetischen Geräusche/Schwingungen eines Signals und/oder des Merkmals der Zuführung/Nichtzuführung des Treib- und Schmierstoffs in den Behälter der Technik gespeichert wird,
wobei diese Information in einer Adaptierungseinheit (13) des Sensors (3) zum Erkennen akustischer/elektromagnetischer Geräusche/Schwingungen und/oder der Zuführung/Nichtzuführung des Treib- und Schmierstoffs in den Behälter der Technik gespeichert wird, und wobei der genannte Sensor eine Information übergibt, die als zweiter Faktor der Identifikation der Technik bereitgestellt und an der Technik angebracht ist
**dadurch gekennzeichnet,**
- **dass** das Identifikationssystem einen Zufallsgenerator (8) aufweist,
- der Zufallsgenerator (8) ausgebildet ist, die Treib- und Schmierstoffzufuhr von der Tanksäule (12) in zufälligen Momenten durch Erzeugung eines Abschaltsignals abzuschalten,
- wobei wenn ein Signal vom Sensor (3) bezüglich der Zuführung von Treib- und Schmierstoff trotz Abschaltung durch den Zufallsgenerator (8) weiter beim Datenverarbeiter ankommt, dies als Simulation des Sensorsignals interpretiert und die Zufuhr von Treib- und Schmierstoff zum Fahrzeug vom Identifikationssystem blockiert wird.

2. Verfahren zur adaptiven multifaktoriellen Kombinationsidentifikation von Besitzern und deren Technik an einer Bedienungsstelle nach Anspruch 1,
**dadurch gekennzeichnet,**
**dass** beim Fehlen einer Verbindung der Bedienungsstelle mit dem Operationszentrum des Kartensystems oder eines zentralisierten Überwachungssystems und/oder zur Verhinderung des Risikos einer Bedienungsblockierung und/oder eines Betrugs oder Missbrauchs während der Bedienung durch Überhöhung des vorgegebenen Dienstleistungsumfangs der Sensor zum Erkennen akustischer/elektromagnetischer Geräusche/Schwingungen und/oder der Zuführung/Nichtzuführung des Treib- und Schmierstoffs in den Behälter der Technik, der die Zuführung/Nichtzuführung des Treib- und Schmierstoffs in den Behälter erkennt oder registriert, und der die Information liefert, die einen zusätzlichen oder Hauptfaktor für die Identifikation der Technik darstellt, und der an der Technik angebracht ist, im Voraus mit einer Speichereinheit ausgerüstet ist, in der zusätzliche Daten über die vorbestimmten Dienstleistungen gespeichert werden, die für das Funktionieren des Identifikationssystems notwendig sind,
**dass** dabei die Speichereinheit (14) des Sensors (3) während der Bedienung an den Datenverarbeiter (7) angeschlossen ist, damit das Identifikationssystem die Daten über die vorgegebenen Dienstleistungen erhält und
**dass** nach der Bedienung die Information in der Speichereinheit aktualisiert/geändert wird.

3. System zur adaptiven multifaktoriellen Kombinationsidentifikation von Besitzern und deren Technik an einer Bedienungsstelle, das mehr als einen Informationsträger (1, 2) als ein erster Faktor der Identifikation, und mehr als eine Ablesevorrichtung (4, 5, 6) enthält, die an einen Datenverarbeiter (7) angeschlossen sind, sowie einen Sensor (3) zum Erkennen akustischer/elektromagnetischer Geräusche/Schwingungen und/oder der Zuführung/Nichtzuführung des Treibund Schmierstoffs in den Behälter der Technik enthält, der erkennt oder registriert, ob ein Treib- und Schmierstoff in den Behälter der Technik zugeführt bzw. nicht zugeführt wird, und der eine Information übergibt, die einen zweiten Faktor der Identifikation der Technik darstellt, wobei das genannte System mit einer entsprechenden Einrichtung für die Datenübertragung von einem solchen Sensor (3) zum Datenverarbeiter (7) ausgerüstet ist,
**dadurch gekennzeichnet,**
**dass** der Sensor (3) zum Erkennen akustischer/elektromagnetischer Geräusche/Schwingungen und/oder der Zuführung/Nichtzuführung des Treib- und Schmierstoffs in den Behälter der Technik, der erkennt oder registriert, ob der Treib- und Schmierstoff in den Behälter der Technik zugeführt bzw. nicht zugeführt wird, eine Information übergibt, die den zweiten Faktor der Identifikation der Technik darstellt, und an der Technik angebracht ist, zusätzlich eine Adaptierungseinheit aufweist, die bei der Einstellung zwecks Adaptierung für die Arbeit mit einem konkreten Fahrzeug die Anpassung der Identifikationsparameter an tatsächliche physikalische Eigenschaften dieser Technik ermöglicht, wobei die genannten Identifikationsparameter von der Ausführung des Fahrzeugs abhängen und durch den Sensor zum Erkennen akustischer/elektromagnetischer Geräusche/Schwingungen und/oder der Zuführung/Nichtzuführung des Treib- und Schmierstoffs in den Behälter der Technik geliefert werden und
- **dass** das Identifikationssystem einen Zufallsgenerator (8) aufweist,
- der Zufallsgenerator ausgebildet ist, die Treib- und Schmierstoffzufuhr von der Tanksäule (12) in zufälligen Momenten durch Erzeugung eines Abschaltsignals abzuschalten,
- wobei wenn ein Signal vom Sensor (3) bezüglich der Zuführung von Treib- und Schmierstoff trotz Abschaltung durch den Generator (8) weiter beim Datenverarbeiter ankommt, dies als Simulation des Sensorsignals interpretiert und die Zufuhr von Treib- und Schmierstoff zum Fahrzeug vom Identifikationssystem blockiert wird.

4. System zur adaptiven multifaktoriellen Kombinationsidentifikation von Besitzern und deren Technik an einer Bedienungsstelle nach Anspruch 4,
**dadurch gekennzeichnet,**
**dass** zur Verhinderung des Risikos der Bedienungsblockierung und/oder eines Betrugs oder Missbrauchs während der Bedienung durch eine Überhöhung des vorgegebenen Dienstleistungsumfangs bei eventuellen Fällen, in denen die Verbindung der Bedienungsstelle mit dem Operationszentrum des Kartensystems oder einem gemeinsamen System der multifaktoriellen Kombinationsidentifikation fehlt, der Sensor (3) zum Erkennen akustischer/elektromagnetischer Geräusche/Schwingungen und/oder der Zuführung/Nichtzuführung des Treib- und Schmierstoffs in den Behälter der Technik, der die Zuführung/Nichtzuführung des Treib- und Schmierstoffs in den Behälter erkennt oder registriert, und der die Information liefert, die einen zusätzlichen Faktor für die Identifikation der Technik darstellt, und der an der Technik angebracht ist, im Voraus zusätzlich mit einer Speichereinheit (14) ausgerüstet ist, die während der Bedienung des Fahrzeugs an den Datenverarbeiter (7) angeschlossen wird, dass dabei der Datenverarbeiter (7) die Daten über den vorgegebenen Dienstleistungsumfang erhält, und
**dass** die Information nach der Bedienung in der Speichereinheit (14) geändert wird.

## Claims

1. Method for adaptive multifactorial combination identification of owners and their technology, namely a vehicle, at a service station, namely a petrol pump (12), by means of an identification system, in which operation takes place only if information carriers (1, 2) are present as a first factor of identification, which identify the owner and the technology associated with him, wherein
- in order to check the operating condition specified for the owner and his technology, information is read from the information carriers (1, 2) by means of reading devices (4, 5, 6) in a data processor (7),
- when a condition specified in a data processor (7) is fulfilled, the specified service, namely the dispensing of a fuel and lubricant, is provided, i.e. the latter is sold,
- the operation of the owner or his technique is performed only when an information combination read from the information carriers (1, 2) of the owner and his technique in the operation area (10) at the time of operation coincides with the information combination predetermined in advance in the data processor (7) corresponding to the operation condition,
- the owner's technique is equipped by the information carrier (1, 2) with a sensor (3) for detecting acoustic/electromagnetic noise/vibration and/or a supply/non-supply of the fuel and lubricant into a container of the technique which transmits information constituting a second factor of identification of the technique, and the owner has attached the sensor (3) in advance to the technique in his possession,
and
- the operation of the owner or his technique is registered at the reception/absence of the information from the mentioned sensor (3) for the detection of acoustic/electromagnetic noises/vibrations and/or the feeding/non-feeding of the fuel and lubricant into the tank of the technique,
wherein during the setting of the identification system for the purpose of adaptation of the system for a concrete technique, information about the execution of this technique is stored in the form of values of acoustic/electromagnetic sounds/vibrations of a signal and/or the characteristic of feeding/non-feeding of the fuel and lubricant into the container of the technique,
wherein said information is stored in an adaptation unit (13) of the sensor (3) for detecting acoustic/electromagnetic noises/vibrations and/or the feeding/non-feeding of the fuel and lubricant into the container of the technique, and wherein said sensor transmits information provided as a second factor of identification of the technique and attached to the technique
**characterized in that**
- that the identification system comprises a random number generator (8),
- the random generator (8) is designed to shut off the fuel and lubricant supply from the fuel dispenser (12) at random moments by generating a shut-off signal,
- wherein if a signal from the sensor (3) regarding the supply of fuel and lubricant continues to arrive at the data processor despite being switched off by the random generator (8), this is interpreted as a simulation of the sensor signal and the supply of fuel and lubricant to the vehicle is blocked by the identification system.

2. A method for adaptive multifactorial combination identification of owners and their technology at an operator station according to claim 1,
**characterized in that**
that in the absence of a connection of the service point with the operation center of the card system or a centralized monitoring system and/or to prevent the risk of service blocking and/or fraud or abuse during the service by exceeding the predetermined service level, the sensor for detecting acoustic/electromagnetic noise/vibration and/or the feeding/non-feeding of the fuel and lubricant into the container of the technique, which detects or registers the feeding/non-feeding of the fuel and lubricant into the container, and which provides the information constituting an additional or main factor for the identification of the technique, and which is mounted on the technique, is equipped in advance with a memory unit in which additional data on the predetermined services necessary for the functioning of the identification system are stored,
**in that** in the process the memory unit (14) of the sensor (3) is connected to the data processor (7) during the operation so that the identification system receives the data on the predetermined services , and
that after the operation the information in the memory unit is updated/changed.

3. System for adaptive multifactorial combination identification of owners and their technology at a service station, including more than one information carrier (1, 2) as a first factor of identification, and more than one reading device (4, 5, 6) connected to a data processor (7), as well as a sensor (3) for detecting acoustic/electromagnetic noises/vibrations and/or the feeding/non-feeding of the fuel and lubricant into the container of the technique, which detects or registers whether a fuel and lubricant is fed into or and which transmits information representing a second factor of identification of the technique, said system being equipped with corresponding means for data transmission from such sensor (3) to the data processor (7),
**characterized in that**
that the sensor (3) for detecting acoustic/electromagnetic noises/vibrations and/or the feeding/non-feeding of the fuel and lubricant into the container of the technique, which detects or registers whether the fuel and lubricant is fed or not fed into the container of the technique, respectively the sensor for detecting acoustic/electromagnetic noises/vibrations and/or the feeding/non-feeding of the fuel and lubricant into the container of the technique, which sensor detects or registers whether the fuel and lubricant is fed or not fed into the container of the technique, transmits information representing the second factor of identification of the technique, and is mounted on the technique, additionally comprises an adaptation unit which, when set for adaptation for work with a concrete vehicle, enables adaptation of the identification parameters to actual physical properties of this technique, said identification parameters depending on the design of the vehicle and being provided by the sensor for detecting acoustic/electromagnetic noises/vibrations and/or the feeding/non-feeding of the fuel and lubricant into the container of the technique, and
- that the identification system comprises a random number generator (8),
- the random generator is designed to shut off the fuel and lubricant supply from the fuel dispenser (12) at random moments by generating a shut-off signal,
- wherein if a signal from the sensor (3) regarding the supply of fuel and lubricant continues to arrive at the data processor despite being switched off by the generator (8), this is interpreted as a simulation of the sensor signal and the supply of fuel and lubricant to the vehicle is blocked by the identification system, continues to arrive at the data processor by the generator (8).

4. A system for adaptive multifactorial combination identification of owners and their technology at an operator station according to claim 4,
**characterized in that**
that in order to prevent the risk of the operation blocking and/or fraud or abuse during the operation by an excess of the predetermined service scope in possible cases when the connection of the operation center with the operation center of the card system or a common system of the multifactorial combination identification is missing, the sensor (3) for detecting acoustic/electromagnetic noises/vibrations and/or the feeding/non-feeding of the fuel and lubricant into the container of the technique, which detects or registers the feeding/non-feeding of the fuel and lubricant into the container, and which provides the information constituting an additional factor for the identification of the technique, and which is attached to the technique, is additionally equipped in advance with a memory unit (14) which is connected to the data processor (7) during the operation of the vehicle,
that in doing so, the data processor (7) receives the data on the specified scope of services, and that the information is changed in the memory unit (14) after operation.

## Revendications

1. Procédé pour l'identification de combinaison adaptive multifactorielle de propriétaires et de leur technique, en l'occurrence un véhicule dans un poste de manoeuvre, en l'occurrence d'une pompe à essence (12), par le biais d'un système d'identification dans lequel un fonctionnement n'ait lieu seulement que si des supports d'information (1, 2) sont disponibles en qualité de premier facteur d'identification identifiant le propriétaire et la technique connectée à lui où
- une information des supports d'information (1, 2) est isolée pour l'examen de la condition de la manoeuvre prédéfinie et pour le propriétaire et pour sa technique par le biais de dispositifs de lecture (4,5,6) dans un processeur de données (7);
- Le service prédéterminé lors de l'exécution de la condition prédéfinie dans un processeur de données (7), en l'occurrence la distribution du carburant et du lubrifiant, est fourni, et donc ce dernier est vendu;
- La manoeuvre du propriétaire ou le cas échéant de sa technique n'ait eu lieu seulement que si une combinaison d'information lue des supports d'information (1,2) du propriétaire et de sa technique dans la zone de la manoeuvre (10) correspond à la condition de la manoeuvre;
- La technique du propriétaire du support d'information (1, 2) est équipée d'un capteur (3) pour l'identification de sons/vibrations acoustiques/électromagnétiques et/ou l'alimentation/la non-alimentation en carburant et en lubrifiant dans un récipient de la technique transmettant une information présentant un deuxième facteur de l'identification de la technique et le propriétaire du capteur (3) a monté à l'avance la technique en sa possession
Et
- La manoeuvre du propriétaire ou de sa technique lors de la réception/l'absence de l'information du dit capteur (3) est enregistrée pour l'identification de sons/vibrations acoustiques/électromagnétiques et/ou l'alimentation/la non-alimentation en carburant et en lubrifiant dans un récipient de la technique;
Où une information pour l'exécution de cette technique lors du réglage du système d'identification pour l'adaptation du système pour une technique concrète sous forme de valeurs de sons/vibrations acoustiques/électromagnétiques d'un signal et/ou de l'attribut de l'alimentation/la non-alimentation en carburant et en lubrifiant dans un récipient de la technique est emmagasinée;
Où cette information est emmagasinée dans une unité d'adaptation (13) du capteur (3) pour l'identification de sons/vibrations acoustiques/électromagnétiques et/ou l'alimentation/la non-alimentation en carburant et en lubrifiant dans un récipient de la technique et où le dit capteur transmet une information déployée comme un deuxième facteur de l'identification de la technique et est montée sur la technique Est caractérisé de sorte que
- le système d'identification présente un générateur aléatoire (8);
- Le générateur aléatoire (8) est formé pour désactiver l'alimentation en carburant et en lubrifiant de la pompe à essence (12) à des moments aléatoires par le biais de la production d'un signal de désactivation où
si un signal parvint encore du capteur (3) concernant l'alimentation en carburant et en lubrifiant malgré la désactivation du générateur aléatoire (8) vers le processeur de données, ceci est interprété comme une simulation du signal du capteur et l'alimentation en carburant et en lubrifiant vers le véhicule est bloquée par le système d'identification, si un signal du capteur concernant l'alimentation en carburant et en lubrifiant malgré la désactivation par le générateur (8) parvint encore vers le processeur de données.

2. Procédé pour l'identification de combinaison adaptive multifactorielle de propriétaires et de leur technique dans un poste de manoeuvre selon la revendication 1 est caractérisé de sorte que le capteur pour l'identification de sons/vibrations acoustiques/électromagnétiques et/ou l'alimentation/la non-alimentation en carburant et en lubrifiant dans un récipient de la technique lors de l'absence d'une liaison du poste de manoeuvre avec le centre d'opérations du système de cartes ou d'un système de surveillance centralisé et/ou l'obstruction du risque d'obstruction de la manoeuvre et/ou d'une fraude ou de l'utilisation abusive lors de la manoeuvre après la surélévation du volume du service prédéfini est équipé à l'avance d'une unité d'emmagasinement reconnaissant ou emmagasinant l'alimentation/la non alimentation en carburant et en lubrifiant dans le récipient et livrant l'information présentant un facteur supplémentaire ou principale pour l'identification de la technique montée sur la technique où des données supplémentaires sur les services prédéterminés sont emmagasinés qui sont indispensables pour le fonctionnement du système d'identification et que l'unité d'emmagasinement (14) du capteur (3) est connectée lors de la manoeuvre au processeur de données (7) pour que le système d'identification réceptionne les données sur les services prédéfinis et qu'après la manoeuvre l'information est actualisée/modifiée dans l'unité d'emmagasinement.

3. Procédé pour l'identification de combinaison adaptive multifactorielle de propriétaires et de leur technique dans un poste de manoeuvre contenant plus qu'un support d'information (1,2) comme un premier facteur d'identification et plus qu'un procédé de lecture (4,5,6) connectés à un processeur de données (7) ainsi qu'un capteur (3) de sons/vibrations acoustiques/électromagnétiques et/ou de l'alimentation/la non-alimentation en carburant et en lubrifiant dans un récipient de la technique reconnaissant ou emmagasinant si le carburant et le lubrifiant alimente ou n'alimente pas le récipient de la technique transmettant une information présentant un deuxième facteur de l'identification de la technique où ledit système est équipé d'un dispositif correspondant pour la transmission de données de ce capteur (3) en direction du processeur de données est caractérisé de sorte que le capteur (3) pour l'identification de sons/vibrations acoustiques/électromagnétiques et/ou l'alimentation/la non-alimentation en carburant et en lubrifiant dans un récipient de la technique reconnaissant ou emmagasinant si le carburant et le lubrifiant sont alimentés ou le cas échéant non alimentés dans le récipient de la technique transmettant une information présentant le deuxième facteur de l'identification de la technique montée sur la technique présentant à titre supplémentaire une unité d'adaptation permettant l'adaptation des paramètres d'identification lors du réglage pour l'adaptation pour le fonctionnement avec un véhicule concret aux caractéristiques réels physiques de cette technique où lesdits paramètres d'identification dépendent de l'exécution du véhicule et sont livrés par le biais du capteur pour l'identification de sons/vibrations acoustiques/électromagnétiques et/ou l'alimentation/la non-alimentation en carburant et en lubrifiant dans un récipient de la technique et que
- le système d'identification présente un générateur aléatoire (8);
- Le générateur aléatoire (8) est formé pour désactiver l'alimentation en carburant et en lubrifiant de la pompe à essence (12) à des moments aléatoires par le biais de la production d'un signal de désactivation;
Où si un signal parvint encore du capteur (3) concernant l'alimentation en carburant et en lubrifiant malgré la désactivation du générateur (8) vers le processeur de données, ceci est interprété comme une simulation du signal du capteur et l'alimentation en carburant et en lubrifiant vers le véhicule est bloquée par le système d'identification, si un signal du capteur concernant l'alimentation en carburant et en lubrifiant malgré la désactivation par le générateur (8) parvint encore vers le processeur de données.

4. Procédé pour l'identification de combinaison adaptive multifactorielle de propriétaires et de leur technique dans un poste de manoeuvre selon la revendication 4 est caractérisé de sorte que le capteur (3) pour l'identification de sons/vibrations acoustiques/électromagnétiques et/ou l'alimentation/la non-alimentation en carburant et en lubrifiant dans un récipient de la technique, pour obstruer le risque de blocage de la manoeuvre et/ou la fraude ou la mauvaise utilisation lors de la manoeuvre par le biais de la surélévation du volume de service prédéfini dans des cas éventuels où la liaison du poste de manoeuvre à un centre d'opérations du système de cartes ou d'un système commun avec le système d'opération du système de cartes ou d'un système commun de l'identification de combinaison multifactoriel manque, reconnaisse ou emmagasine l'alimentation/ la non alimentation en carburant et en lubrifiant dans le récipient livrant l'information présentant un facteur supplémentaire pour l'identification de la technique montée sur la technique et qui est équipé à l'avance et à titre supplémentaire d'une unité d'emmagasinement (14) connectée lors de la manoeuvre du véhicule au processeur de données (7) et que le processeur de données (7) réceptionne les données via le volume prédéfini de service et que l'information est modifiée après la manoeuvre de l'unité d'emmagasinement (14).
